Europäisches Patentamt

European Patent Office

Office européen des brevets

(19)

(11) Veröffentlichungsnummer: **0 373 435**
**A2**

## (12) EUROPÄISCHE PATENTANMELDUNG

(21) Anmeldenummer: 89122174.9

(22) Anmeldetag: 01.12.89

(51) Int. Cl.⁵: **G11B 5/86, G11B 5/70**

(30) Priorität: 15.12.88 DE 3842176

(43) Veröffentlichungstag der Anmeldung:
**20.06.90 Patentblatt 90/25**

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Steuerwald, Manfred**
**Weidenstrasse 3 b**
**D-6710 Frankenthal(DE)**
Erfinder: **Ohlinger, Manfred, Dr.**
**Anselm-Feuerbach-Strasse 13**
**D-6710 Frankenthal(DE)**
Erfinder: **Kovacs, Jenoe, Dr.**
**Kantstrasse 9**
**D-6717 Hessheim(DE)**
Erfinder: **Schwarz, Dieter**
**Hubestrasse 23**
**D-6940 Weinheim(DE)**

(54) **Transferfolie mit Magnetschicht.**

(57) Die Erfindung betrifft eine Transferfolie mit einer Magnetschicht, im wesentlichen bestehend aus einer Trägerfolie, einer Trennschicht und einer davon ablösbaren, mindestens aus einer Magnetschicht gebildeten Transferschicht, wobei auf der zur Trägerfolie weisenden Seite der Magnetschicht nach dem Ablösen der Trägerfolie die oberflächenbildende Schicht aus einer, anorganische Pigmente in einer vernetzten Polymermatrix enthaltenden Deckschicht in einer Dicke von 0,2 bis 5,0 $\mu$m mit einem Oberflächenwiderstand von $10^{-1}$ bis $10^{-8}$ Ohm/cm besteht.

EP 0 373 435 A2

## Transferfolie mit Magnetschicht

Die Erfindung betrifft eine Transferfolie mit einer Magnetschicht, im wesentlichen bestehend aus einer Trägerfolie, einer Trennschicht und einer davon ablösbaren, mindestens eine Magentschicht aufweisenden Transferschicht.

Transferfolien, auch Prägefolien genannt, werden in großem Umfang bei der Herstellung von Kreditkarten, Identitätsausweisen, Fahrkarten für Verkehrsmittel usw. eingesetzt. Sie bestehen im wesentlichen aus einer Trägerfolie und einer von dieser ablösbaren Transferschicht, welche im einfachsten Fall aus einer, magnetisierbares Material in einer Bindemittelmatrix aufweisenden Magnetschicht aufgebaut ist. Gegebenenfalls kann auf der der Trägerfolie abgewandten Seite der Transferfolie eine Klebeschicht aufgebracht sein, welche zur Fixierung der Transferschicht auf dem damit zu versehenden Substrat dient.

Prägefolien, insbesondere Heißprägefolien, aus einer Magnetschicht und weiteren für die Beschriftung vorgesehenen Schichten sind in der DE-A 34 22 911 beschrieben. Aus der US-A 4 376 006 ist bekannt, auf der zur Trägerfolie weisenden Seite der Magnetschicht eine Metallschicht und eine Lackschicht vorzusehen. Durch diese Ausbildung soll die Möglichkeit geschaffen werden, eine Magnet-Prägefolie auch in hellen Farben zu gestalten, wozu die im allgemeinen dunkle Magnetschicht von der Metallschicht abgedeckt wird. Mit einem derartigen Vorgehen werden rein dekorative Zwecke verfolgt.

In ähnlicher Weise wird gemäß der WO 87/06745 vorgegangen. Auch hier wird auf der zur Trägerfolie weisenden Seite der Magnetschicht eine Deckschicht aufgebracht, welche durch ihre Undurchsichtigkeit die auf bzw. in dem Informationsträger vorhandenen speziell angeordneten magnetischen und unmagnetischen Spuren abdecken soll.

Viele dieser mit einer Transferschicht versehenen Informationsträger werden jedoch bei dem vielfältigen und unter ungünstigen Umgebungsbedingungen vorgenommenen Gebrauch leicht beschädigt und gegebenenfalls unbrauchbar. Beispielhaft seien hier Parkausweise, Fahrkarten oder auch Kreditkarten genannt. Ursache für diese Art Beschädigung oder gar Ausfall ist sowohl in der Kratzempfindlichkeit als auch in der Schmutzanziehung der Transferschicht zu sehen. So sammeln sich Fremdteilchen auf der Oberfläche der transferierten Magnetschicht und verursachen mechanische Beschädigungen, die schließlich zu Signalverlusten führen. Aufgabe der vorliegenden Erfindung war es daher diesen Nachteil zu beheben.

Es wurde nun gefunden, daß mit Hilfe von Transferfolien mit einer Magnetschicht, im wesentlichen bestehend aus einer Trägerfolie, einer Trennschicht und einer davon ablösbaren, mindestens aus einer Magnetschicht gebildeten Transferschicht, die Aufgabe gelöst werden kann, wenn auf der zur Trägerfolie weisenden Seite der Magnetschicht nach dem Ablösen der Trägerfolie die oberflächenbildende Schicht aus einer, anorganische Pigmente in einer vernetzten Polymermatrix enthaltenden Deckschicht in einer Dicke von 0,2 bis 5,0 $\mu$m mit einem Oberflächenwiderstand von $10^{-1}$ bis $10^{-8}$ Ohm/cm besteht.

Die erfindungsgemäßen Transferfolien ermöglichen die Ausbildung einer kratzfesten und antistatisch ausgerüsteten Oberflächenschicht auf dem durch die Transferschicht gebildeten Teil des Informationsträgers. Auf diese Weise wird der mechanischen Beschädigung und der Schmutzanziehung beim üblichen Gebrauch der speziellen Informationsträger vorgebeugt und die Gefahr von Informationsverlusten der in der Magnetschicht gespeicherten Daten stark vermindert. Diese speziellen unmagnetischen Oberflächenschichten bewirken bei den erfindungsgemäßen Transferfolien im Fensterbereich nach ISO-Norm 3554 und ISO-Norm 7811 keine oder nur unwesentliche Signalverluste.

Die Herstellung der erfindungsgemäßen Transferfolie geschieht im wesentlichen nach der bekannten Vorgehensweise. So wird zunächst die Trägerfolie, im allgemeinen eine Polyethylenterephthalat-Folie mit einer Trennschicht in einer Dicke von 0,1 bis 0,5 $\mu$m überzogen. Diese Trennschicht besteht meist aus Polyvinylalkylcarbamat, Polyglycerinstearat, Polyvinyloctadecylether oder ähnlichen hierfür bekannten Verbindungen.

Auf dieser Trennschicht ist dann die Transferschicht aufgebracht. Hierzu wird zuerst die spezielle Deckschicht, welche nach dem übertragen der Transferschicht auf das für den Informationsträger vorgesehene Substrat die Oberflächenschicht bildet, hergestellt.

Die Deckschichten bestehen zweckmäßigerweise aus einer vernetzten Polymermatrix, die feinverteilt anorganische Pigmente enthält, wodurch die Schicht nicht nur eine größere mechanische Stabilität, sondern auch einen geringen Oberflächenwiderstand aufweist. Als anorganische Pigmente lassen sich beispielsweise Ruß, Zinndioxid, Lithiumchlorid, unmagnetische Eisenoxide und die bekannten, zur Ausbildung leitfähiger Zentren befähigten Stoffe verwenden. Diese Materialien werden in einer Lösung des polymeren Bindemittels in bekannter Weise dispergiert und nach dem Auftragen in einer Schichtstärke zwischen 0,2 und 5,0, vorzugsweise zwischen 0,3 und 2,0 µm, mittels Dispersionsgießern in der bekannten Art vernetzt. Geeignete Bindemittel u.a. sind die bekannten allein oder in Abmischungen eingesetzten Polyurethane, Epoxidharze, Polyvinylalkoholderivate, Vinylchloridcopolymerisate, Nitrocellulose, Polyester, Polyester mit Sulfonatgruppen, Polymere mit Acrylatgruppen, welche sich durch chemische oder Elektronenstrahlvernetzung härten lassen.

Auf diese Deckschicht wird schließlich die Magnetschicht aufgebracht. Sie besteht aus einer Dispersion von meist nadelförmigen Materialien, wie z.B. modifizierte oder unmodifizierte Gamma-Eisenoxide, Chromdioxid, ferromagnetische Metallteilchen oder nadel- oder plättchenförmige hexagonale Ferrite vom Bariumferrittyp, in einem Polymerbindemittel, z.B. einem Polyurethan, und verschiedenen Lackhilfsmitteln. Derartige Magnetdispersionen sind bekannt ebenso wie das Auftragen auf ein Substrat.

Je nach Verwendungszweck kann gegebenenfalls auf diese Magnetschicht noch eine Klebeschicht aufgebracht werden, mit der die Transferschicht später auf dem Substrat des Informationsträgers befestigt wird.

Der wiedergegebene Aufbau der erfindungsgemäßen Transferfolie ist im Rahmen der für derartige Informationsträger üblichen und bekannten Weise variierbar. Wesentlich und für die Lösung der Aufgabe der Erfindung nötig ist die nach der Übertragung der Transferschicht oberflächenbildende Deckschicht. Diese harte, kratzfeste und antistatische Deckschicht erstreckt sich über die gesamte Fläche der Magnetschicht. Sie verhindert, daß bei häufiger Benutzung der Magnetkarten frühzeitig Fehler auftreten. Die antistatische Deckschicht trägt außerdem dazu bei, die Fälschungssicherheit der in den Magnetstreifen gespeicherten Daten zu erhöhen, da die Magnetschicht und die Deckschicht voneinander kaum zu trennen sind. Andererseits kann das Vorhandensein solcher leitfähiger Deckschichten durch Messung des Oberflächenwiderstandes leicht nachgewiesen werden. Ein weiterer Vorteil dieser oberflächenbildenden Schichten besteht darin, daß diese Schichten nach dem Aushärten von organischen Lösungsmitteln nicht mehr angegriffen werden können, so daß eine sehr gute Bedruckbarkeit der Oberschicht mit Farbschichten möglich wird.

Die Erfindung sei anhand der folgenden Beispiele näher erläutert.

Beispiel 1

20 Teile einer 12,5%igen Lösung eines handelsüblichen Polyurethans, aufgebaut aus einem Polyesterol und einem Polyisocyanat und 22 Teile einer 20%igen Lösung eines handelsüblichen Polyvinylchlorids, jeweils in Tetrahydrofuran gelöst, werden zusammen mit 30 Teilen Ruß, 8 Teilen eines unmagnetischen Eisenoxids als Mattierungsmittel und einem Teil Myristinsäure mit 400 Teilen Tetrahydrofuran und 75 Teilen Cyclohexanon in einer Rührwerksmühle dispergiert. Die Dispergierung wurde solange durchgeführt bis der maximale Glanzwert von Handabstrichen der Dispersion erreicht wurde. Vor der weiteren Verarbeitung wird die Dispersion mit 10 Teilen eines Additionsprodukts aus 522 Teilen Toluylendiisocyanat und 134 Teilen Trimethylolpropan (50%ig in THF) versetzt und bis zum Auftrag 20 Minuten gerührt.

Beispiel 2

Eine 11,5 µm dicke Polyethylenterephthalat-Folie wurde zunächst mittels einer Rasterwalze mit einer 0,3 µm dicken Trennschicht aus Polyglycerinstearat versehen. Danach wurde mit einer Rasterwalze diese Schicht mit der in Beispiel 1 beschriebenen Dispersion beschichtet. Die Schichtstärke lag bei 0,6 µm. Anschließend wurde darauf eine Magnetdispersion auf der Basis Bariumferrit derart aufgebracht, daß eine Magnetschicht von 12,5 µm entstand. Die so hergestellte Transferfolie wurde unter Anwendung von Hitze und Druck auf Kreditkarten übertragen.

Der Hc-Wert der Magnetschicht betrug 302 kA/m und die Remanenz 130 mT. Der oberflächenwiderstand der transferierten Schicht war $3 \times 10^{-3}$ Ohm/cm.

Vergleichsversuch 1

Die Herstellung der Transferfolie wurde wiederholt, jedoch ohne Aufbringen einer Deckschicht. Der Hc-Wert der so entstandenen Transferschicht betrug 299 kA/m und die Remanenz 128 mT. Es wurde ein Oberflächenwiderstandswert von $10^{-10}$ Ohm/cm bestimmt.

Die Magnetkarten erhalten nach Beispiel 2 und Vergleichsversuch 1 wurden auf einem Rinas-Meßgerät untersucht. Die Lesespannungskurve nach ISO-Norm 7811 waren identisch. Bei der mechanischen Belastbarkeit der Magnetstreifen gab es jedoch deutliche Unterschiede. Die Magnetkarte ohne Deckschicht (Vergleichsversuch 1) hatte auf einem handelsüblichen SchreibLesegerät (Firma Olivetti) nach 30 Durchläufen zwischen 15 und 20 Fehler, während die Magnetkarte gemäß Beispiel 2 auch nach 500 Durchläufen keine Fehler zeigte.

Beispiel 3

Wie in Beispiel 2 beschrieben wurde eine Transferfolie aus einer $\gamma$-$Fe_2O_3$)Magnetdispersion und der Deckschichtdispersion gemäß Beispiel 1 hergestellt. Die Schichtstärke der Magnetschicht betrug 15 $\mu$m und die der Deckschicht 1,2 $\mu$m. Der Hc-Wert der Transferschicht war 24 kA/m und die Remanenz 93 mT. Der Oberflächenwiderstand der transferierten Schicht betrug $1,8 \times 10^{-4}$ Ohm/cm.

Vergleichsversuch 2

Wie im Beispiel 3 beschrieben, wurde eine Transferfolie ohne Deckschicht hergestellt. Der Hc-Wert der Transferschicht betrug 25 kA/m und die Remanenz 95 mT. Die Vergleichsuntersuchungen auf einem Lesespannungs-Meßgerät zeigten keine Unterschiede in der Lesespannungskurve nach ISO 7811. Es wurde ein Oberflächenwiderstand von $8 \times 10^{-9}$ Ohm/cm ermittelt.

Beim Dauerbetrieb zeigte die Magnetkarte gemäß Vergleichsversuch 2 nach 450 Meßeinheiten bereits deutliche Kopfspuren, während auf der Karte gemäß Beispiel 3 nach 500 Messungen noch keinerlei Schädigung festzustellen war.

**Ansprüche**

1. Transferfolie mit einer Magnetschicht, im wesentlichen bestehend aus einer Trägerfolie, einer Trennschicht und einer davon ablösbaren, mindestens aus einer Magnetschicht gebildeten Transferschicht, dadurch gekennzeichnet, daß auf der zur Trägerfolie weisenden Seite der Magnetschicht nach dem Ablösen der Trägerfolie die oberflächenbildende Schicht aus einer, anorganische Pigmente in einer vernetzten Polymermatrix enthaltenden Deckschicht in einer Dicke von 0,2 bis 5,0 $\mu$m mit einem Oberflächenwiderstand von $10^{-1}$ bis $10^{-8}$ Ohm/cm besteht.

2. Transferfolie gemäß Anspruch 1, dadurch gekennzeichnet, daß das anorganische Pigment ausgewählt wird aus der Gruppe von Ruß, Zinndioxid, unmagnetische Eisenoxide, Lithiumchlorid oder deren Mischungen.

3. Transferfolie gemäß Anspruch 2, dadurch gekennzeichnet, daß die vernetzte Polymermatrix erhalten wird durch Reaktion mindestens eines Bindemittels aus der Gruppe der Polyurethane, Epoxidharze, Vinylchloridcopolymerisate und Polyester mit einem Polyisocyanat.